# EUROPÄISCHE PATENTSCHRIFT

(11) **EP 2 191 654 B1**
(45) Veröffentlichungstag und Bekanntmachung des Hinweises auf die Patenterteilung: **03.12.2014**
(21) Anmeldenummer: 08785938.5
(22) Anmeldetag: 07.07.2008
(51) Int. Cl.: H04N 9/04, B60Q 1/14

(54) **FARBMASKE FÜR EINEN BILDSENSOR EINER FAHRZEUGKAMERA**
COLOR MASK FOR AN IMAGE SENSOR OF A VEHICLE CAMERA
MASQUE CHROMATIQUE POUR UN CAPTEUR D'IMAGE D'UNE CAMÉRA EMBARQUÉE

(30) Priorität: 24.08.2007 DE 102007040114
(43) Veröffentlichungstag der Anmeldung: 02.06.2010
(73) Patentinhaber: Robert Bosch GmbH, 70442 Stuttgart (DE)
(72) Erfinder: SEGER, Ulrich, 71229 Warmbronn (DE); BERGEN, Lothar, 70839 Gerlingen (DE); FRITZ, Steffen, 75449 Wurmberg (DE)
(86) Internationale Anmeldenummer: PCT/EP2008/058742
(87) Internationale Veröffentlichungsnummer: WO 2009/027134

(56) Entgegenhaltungen:
- WO-A-2005/115820
- US-A1- 2006 177 098

## Beschreibung

### Stand der Technik

Zur Umschaltung zwischen Abblendlicht und Fernlicht eines Fahrzeuges sind selbsttätige bzw. automatische Umschaltsysteme bekannt, bei denen eine Fahrzeugkamera ermittelt, ob in einem relevanten Bereich vor dem Fahrzeug andere Fahrzeuge bzw. Verkehrsteilnehmer vorhanden sind und in Abhängigkeit dieser Ermittlung selbsttätig zwischen Fernlicht und Abblendlicht umgeschaltet wird. Die Kameras weisen im Allgemeinen Sensoren mit einer Farbmaske auf, die eine farbliche Differenzierung, insbesondere Rot-Weiß-Differenzierung, ermöglicht, um die im Allgemeinen roten Rücklichter und im Allgemeinen weißen Abblendlichter und Fernlichter anderer Fahrzeuge zu erkennen und voneinander zu unterscheiden. Hierbei soll insbesondere auch z. B. ein schwaches rotes Licht von einer weißen Reflexion an einem anderen Objekt, z. B. einem Verkehrsschild, unterschieden werden können.

Eine der größten Schwierigkeiten bei der Implementierung der Rot-Weiß-Unterscheidung ist die Größe der Lichtquellen, da die Lichtquellen im Allgemeinen nur auf einem Sensor-Pixel abgebildet werden. Durch die Farbmaske ist man somit bei der Implementierung auf eine bewegte Lichtquelle angewiesen, die aufgrund der Bewegung unterschiedliche Pixel mit unterschiedlichen Farben belichtet.

Als Farbmaske werden in der Regel Standard Bayer-Pattern-Masken verwendet, bei denen jedes zweite Filter-Pixel der Farbmaske grün ist, wobei diese grünen Filter-Pixel schachbrettartig alternierend über die Matrixanordnung der Filter-Pixel verteilt angeordnet sind. In den anderen Matrixstellen sind blaue und rote Filter-Pixel angeordnet, wobei Zeilen mit grünen und blauen Pixeln und Zeilen mit roten und grünen Pixeln alternieren. Diese Standard Bayer-Pattern-Maske ermöglicht eine komplette Farbunterscheidung, d. h. eine Interpretation in die Farben rot-blau-grün. Nachteilhaft ist jedoch die Reduktion der Ortsauflösung gegenüber derjenigen eines monochromen Bildsensors um den Faktor 2. Weiterhin sind reduzierte Filtermasken bekannt, bei denen einige Farbpixel dieses Standard Bayer-Patterns weggelassen werden und somit an ihrer Stelle transparente Pixel verbleiben, wodurch die Ortsauflösung erhöht wird.

Die JP 2004304706 A zeigt einen Farbfilter mit grünen, weißen, roten und blauen Farbfiltersegmenten, von denen die für ein Luminiszenz-Signal verwendeten weißen Segmente schachbrettartig jede zweite Matrixstelle belegen und die Farbsegmente die verbleibende andere Hälfte der Matrixstellen belegen. Hierbei alternieren Zeilen mit weißen und grünen Segmenten und Zeilen mit weißen, roten und blauen Segmenten, so dass an den Ecken jedes Grünsegmentes diagonal gegenüberliegend jeweils zwei blaue Segmente und zwei rote Segmente angeordnet sind. Weiterhin wird ein Interpolationsverfahren zur Auswertung der Bildsignale, die mit einer derartigen Farbmaske aufgenommen werden, beschrieben.

Die US 2006/0177098 A1 beschreibt ein System und Verfahren zum automatischen Steuern von Fahrzeug-Außenbeleuchtungen mit einem Bildsensor. Hierbei wird unter anderem eine Farb-Maske zum Aufsetzen vor den Bildsensor vorgeschlagen, die ein Schachbrettmuster aus roten und transparenten Filterpixeln vorsieht.

Die WO 2005/115820 A1 beschreibt eine Überwachungseinheit mit Assistenzsystem für Kraftfahrzeuge, bei dem ein Kamera-System mit einem Bildaufnahmesensor vorgesehen ist, der in partiellen Bereichen Farbkodierungen besitzt und ansonsten monochrome Kodierungen aufweist. Hierbei kann stellenweise bzw. partiell eine Farbfilterverteilung vorgesehen sein, bei der gemäß Figur 5, linke Darstellung alternierend transparente Zeilen und kombinierte Zeilen aus roten und transparenten Filterpixeln vorgesehen sind, sowie weiterhin auch transparente Spalten und Spalten aus roten und transparenten Filterpixeln alternieren. Somit entsprechen sich jeweils erste und dritte Zeilen sowie zweite und vierte Zeilen, entsprechend auch erste und vierte Spalten, und zweite und vierte Spalten.

### Offenbarung der Erfindung

Der Erfindung liegt der Gedanke zu Grunde, eine Farbmaske bzw. Filtermaske mit lediglich zwei verschiedenen Filter-Pixeln zu schaffen, die in den Zeilen und/oder Spalten der Matrixanordnung zueinander versetzt sind.

Eine bevorzugte Ausführungsform liegt hierbei darin, dass die ersten Filter-Pixel ein rotes Transmissionsverhalten und die zweiten Filter-Pixel ein breiteres, den roten Spektralbereich und weitere Spektralbereiche umfassendes Transmissionsverhalten aufweist. Hierbei können die zweiten Filter-Pixel insbesondere im optischen Bereich ganz oder vollständig transparent sein.

Erfindungsgemäß wird als rotes Filter-Pixel ein Filter-Pixel bzw. Filtersegment bezeichnet, das Licht im roten Wellenlängenbereich durchlässt und andere Wellenlängenbereiche im Wesentlichen nicht durchlässt. Als transparentes Filter-Pixel wird ein Filter-Pixel bzw. Filtersegment bezeichnet, das Licht über einen größeren Wellenlängenbereich durchlässt und somit im optischen Bereich im Wesentlichen transparent bzw. weiß erscheint; es lässt somit ein Luminiszenz-Signal zu, bei dem die Gesamt-Helligkeit gemessen wird. Bei Aufbringen der Farbmaske kann für die transparenten Filter-Pixel somit die Maske weggelassen werden, so dass hierfür kein Prozessschritt erforderlich ist und eine vollständige Transparenz erreicht wird.

Indem erfindungsgemäß lediglich transparente und rote Filter-Pixel vorgesehen sind, können die zum Erkennen eines Abblendlichtes bzw. Fernlichtes oder aber eines Rücklichtes zu verwendenden Filter-Pixel mit hoher örtlicher Auflösung angeordnet werden, gegenüber einem Bildsensor ohne Farbmaske mit einer Auflösungsreduktion von z. B. lediglich ca. 1,5.

Dem liegt die erfindungsgemäße Erkenntnis zu Grunde, dass in einem Fahrzeug insbesondere Nickbewegungen, d. h. Schwenkbewegungen (Rotationen) um die Querachse, sowie Gierbewegungen, d. h. Schwenkbewegungen (Rotationen) um die Hochachse auftreten. Nickbewegungen treten insbesondere bei Abbrems- und Beschleunigungsvorgängen sowie aufgrund von Fahrunebenheiten auf; Gierbewegungen treten insbesondere aufgrund größerer oder auch kleinerer Lenkbetätigungen auf. Relevant ist hierbei insbesondere die relative Bewegung zwischen dem Fahrzeug mit der erfindungsgemäßen Kamera und dem zu detektierenden Objekt, so dass eine relative Gierbewegung auch bei geradliniger Fahrt gegenüber einem sich zur Fahrbahn des Fahrzeuges versetzt befindenden Objekt auftreten kann, z. B. einem auf der Gegenfahrbahn fahrenden Fahrzeug.

Hierbei entsprechen Nickbewegungen einem Wandern der erfassten Lichtquelle in vertikaler Richtung auf der Matrix-Anordnung, d. h. entlang der Spalten. Eine Gierbewegung entspricht dem Wandern des Punktes entlang einer horizontalen Zeile der Matrixanordnung. Ein in der Kamera vor dem Sensor angeordnetes Optiksystem erzeugt hierbei zwar eventuell eine Invertierung der Richtungen, d. h. rechts und links sowie oben und unten, dies ist aber für das erfindungsgemäße Prinzip, horizontale Gierbewegungen und vertikale Nickbewegungen zu erkennen, nicht relevant.

Als typischer Fall im Fahrzeug wird das Auftreten von reinen Nickbewegungen erkannt. Hierzu wird eine Matrix-Anordnung geschaffen, in der in jeder Spalte rote Filter-Pixel angeordnet sind, z. B. als jedes vierte Pixel in jeder Spalte, wobei aufeinander folgende Spalten vorzugsweise zueinander versetzt sind. Hierbei können sich entsprechend durchaus auch rein transparente Zeilen ergeben, da diese zur Erfassung einer Nickbewegung nicht relevant sind. Somit kann auch bei relativ geringer Anzahl roter Farbpixel eine Nickbewegung relativ sicher erkannt werden

Gemäß einer weiteren Ausführung können reine Gierbewegungen erfasst werden, wozu die roten Filter-Pixel in allen Zeilen angeordnet sind, vorzugsweise wiederum zueinander versetzt, d.h. bei aufeinander folgender Zeilen in zueinander versetzten Stellen.

Erfindungsgemäß können grundsätzlich auch andere Ausbildungen als Rot-Transparent gewählt werden. Hierbei kann insbesondere ein schmaleres Transmissionsspektrum, d.h. ein farbiges Filter-Pixel wie z. B. auch Blau, Gelb oder Grün oder Mischfarben, mit einem umfassenderen Transmissionsspektrum, insbesondere transparent kombiniert werden. Weiterhin können auch zwei nur teilweise oder auch gar nicht überlappende Spektralbereiche gewählt werden.

Kurze Beschreibung der Zeichnungen
- Fig. 1: zeigt eine Draufsicht auf eine Straßenszene eines Fahrzeugs mit einer Kamera;
- Fig. 2: zeigt eine Kameraanordnung im Fahrzeug mit einem Bildsensor und einer Farbmaske in Seitenansicht bzw. seitlichem Schnitt;
- Fig. 3: zeigt eine Farbmaske gemäß einer ersten Ausführungsform zur Erfassung insbesondere von Nickbewegungen;
- Fig. 4: zeigt eine Farbmaske gemäß einer zweiten Ausführungsform zur Erfassung insbesondere von Gierbewegungen.

### Beschreibung der Ausführungsformen

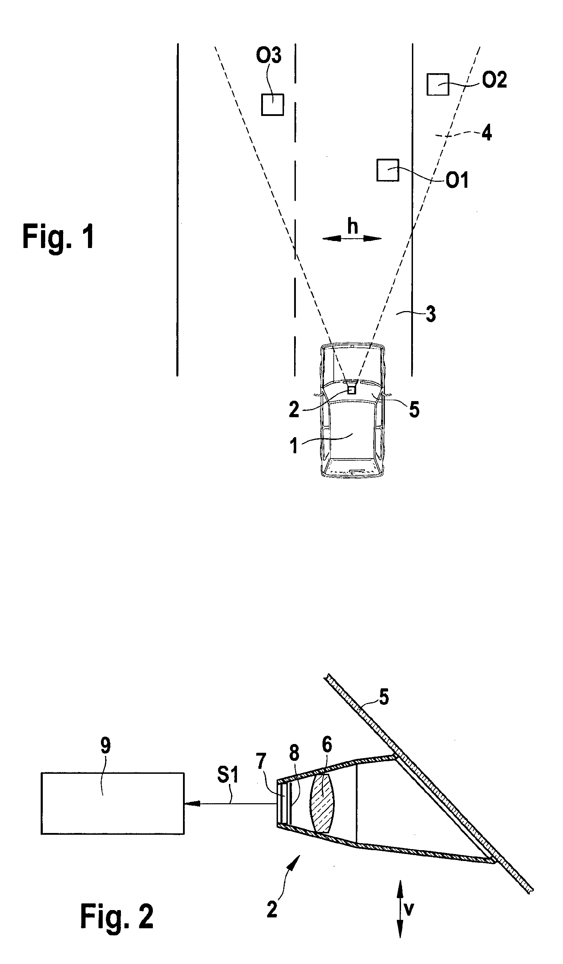

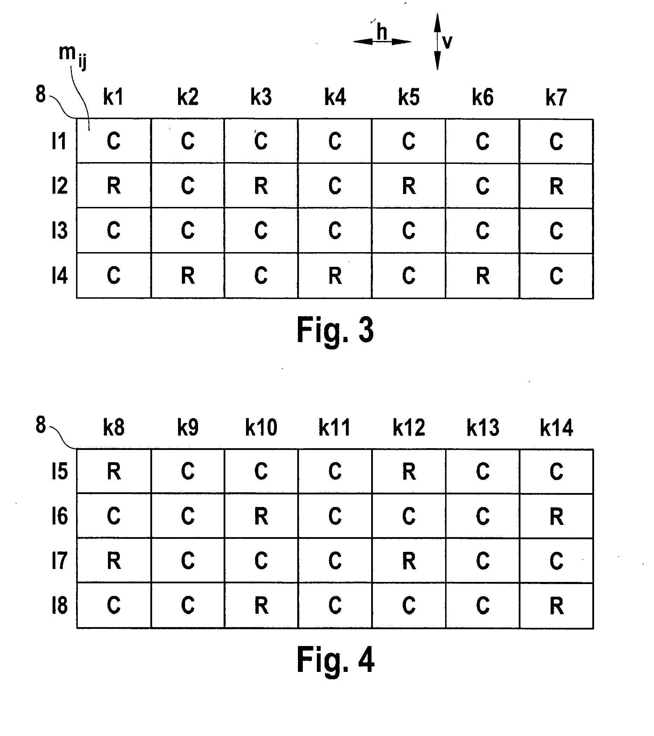

Ein Fahrzeug 1 mit einer Kamera 2 fährt auf einer Fahrbahn 3. In dem Erfassungsbereich 4 der Kamera 2 werden verschiedene Objekte 01, 02, 03 auf und außerhalb der Fahrbahn 3 erfasst. Gemäß Figur 2 ist die Kamera 2 hinter einer Scheibe 5 des Fahrzeuges 1, insbesondere der Windschutzscheibe 5, angebracht und weist neben einer hier nicht detaillierter gezeigten Optik 6 einen Bildsensor 7 mit einer Matrixanordnung aus Sensorpixeln und eine auf den Bildsensor 7 gesetzte Farbmaske (Filtermaske) 8 auf, von der in den Figuren 3 bis 5 verschiedene Ausführungsformen gezeigt sind. Der Bildsensor 7 nimmt das durch die Farbmaske 8 einfallende optische Licht auf und gibt Bildsignale S1 an die Steuer- und Auswerteeinrichtung 9 aus, die somit eine Auswertung in entsprechender örtliche Auflösung vornehmen kann, woraufhin ggf. entsprechende Warnmeldungen oder auch direkte Eingriffe ins Fahrzeugmanagement erfolgen können.

Die Farbmaske 8 weist eine Matrixanordnung aus Filter-Pixeln mᵢⱼ mit i= 1,2, ... und j = 1, 2, ... auf, wobei in Figur 3 bis 5 zur Vereinfachung der Darstellung eine 4x7-Matrix gezeigt ist. Die Filter-Pixel mᵢⱼ filtern das einfallende Licht und lassen jeweils Licht in einem vorgegebenen Wellenlängenbereich durch. Gemäß den gezeigten Ausführungsformen sind die Filter-Pixel mᵢⱼ entweder vollständig (oder im Wesentlichen vollständig) für optisches Licht durchlässig sein; derartige Filter-Pixel mᵢⱼ sind als C (clear) bezeichnet und sind somit transparent bzw. "weiß", oder aber sie lassen als rote Filter-Pixel im Wesentlichen nur rotes Licht durch und sind durch R bezeichnet.

Jedes Filter-Pixel mᵢⱼ ist direkt vor ein Bildsensor-Pixel gesetzt, z. B. aufgeklebt; der in Figur 2 gezeigte Abstand zwischen dem Bildsensor 7 und der Farbmaske 8 dient lediglich der Anschaulichkeit. Die Matrixanordnung mᵢⱼ weist jeweils horizontale Zeilen l1, l2, l3, l4 und vertikale Spalten k1, k2, k3, ... auf. Die horizontale Richtung der Zeilen li entspricht somit der horizontalen Richtung h in Figur 1; die Richtung der vertikalen Spalten kⱼ entspricht der vertikalen Richtung v in Figur 2.

Erfindungsgemäß werden auch kleine Lichtquellen der Objekte 01, 02, 03 berücksichtigt, die auf nur ein Bildsensor-Pixel abgebildet werden. Aufgrund der Bewegung des Fahrzeugs 1 und/oder der Objekte 01, 02, 03 überstreicht die jeweilige Lichtquelle mehrere Pixel auf der Bildsensormatrix und der vorgesetzten Farbmatrix mᵢⱼ. Bei einer Nick-Bewegung des Fahrzeuges 1, d. h. einer Rotation um seine Querachse, wird die Kamera 2 in vertikaler Richtung v geschwenkt, so dass das als Lichtquelle aufgenommene Objekt 01, 02, 03 jeweils in Richtung der Spalten kj wandert; bei einer Gierbewegung, d. h. einer Rotation des Fahrzeuges um seine Hochachse (Gierachse), d. h. parallel zur Fahrbahn 3 in horizontaler Richtung h in Figur 1, wandert das Lichtquellensignal der Objekte 01, 02, 03 somit in horizontaler Richtung, d.h. entlang einer Zeile li.

Die Ausführungsformen der Figur 3 zeigt eine Farbmatrix-Anordnung, in der drei von vier Pixel transparent und jedes vierte Pixel rot ist, wobei in allen Spalten kj rote Filter-Pixel R angeordnet sind. Vorzugsweise alternieren hierbei rein transparente Zeilen l1, l3, deren Filter-Pixel m1j und m3j für alle j = 1, 2,3 ... C sind, sowie dazwischen liegenden Zeilen l2, l4, in denen rote und transparente Filter-Pixel alternieren, d. h. z. B. m21 = m23 = m25 = m27 = R und m22 = m24 = m26 = C.

Die Ausführungsform der Figur 3 eignet sich insbesondere zur Abdeckung reiner Nickbewegungen des Fahrzeugs 1, d. h. einer Bewegung der Kamera 2 in vertikaler Richtung v bzw. Spalten-Richtung. Da Fahrzeuge typischerweise Nickbewegungen durchführen, insbesondere bei Beschleunigen und abbremsen sowie auch aufgrund von Fahrunebenheiten, wird das jeweilige Objekt 01, 02, 03 auch bei Abbildung auf lediglich einem Pixel in der betreffenden Spalte kj mehrere aufeinander folgende Filter-Pixel mij und somit auch ein rotes Filter-Pixel R überstreichen.

Gegenüber einer reduzierten Bayer-Pattern-Farbmatrix, in der rein transparente Spalten auftreten, kann bei gleicher Ortsauflösung durch eine überraschend einfache Maßnahme - nämlich der versetzten Anordnung der Roten Filter-Pixel R - somit bei typischen Nickbewegungen die Sicherheit deutlich erhöht, ein rotes Licht von einer weißen Reflexion zu unterscheiden. Gegenüber einem vollen RGB-Bayer-Pattern tritt lediglich eine Auflösungsreduktion um den Faktor ca. 1,5 auf.

Bei der Ausführungsform der Figur 4 sind in allen Zeilen ki rote Filter-Pixel R vorgesehen. Vorzugsweise alternieren hierbei rein transparente Spalten k9, k11, k13 mit kombinierten, d.h. transparent-roten-Spalten k8, k10, k12, k14, in denen jeweils ein rotes Filter-Pixel R und ein transparentes Filter-Pixel C alternierend angeordnet ist. Hierbei sind wiederum drei von vier Pixel transparent und jedes vierte Pixel rot, d.h. mit gleicher physikalischer Ortsauflösung wie in Fig. 3.

Bei einer Gierbewegung, bei der die Kamera in horizontaler Richtung h schwenkt, wird auch eine kleine Lichtquelle somit durch sowohl transparente als auch rote Pixel erfasst.

Die Steuer- und Auswerteeinrichtung 9 kann somit die Intensitäten der Bildsignale S1 bei transparenten Filterpixeln (Luminiszenzsignal) und roten Filterpixeln vergleichen und hieraus ermitteln, ob die sich über die Matrixanordnung bewegende Abbildung einer Lichtquelle weißes oder rotes Licht aufweist.

## Patentansprüche

1. Farbmaske für einen Bildsensor (7) einer Fahrzeug-Kamera (2),
wobei die Farbmaske (8) eine Matrix-Anordnung (mᵢⱼ) aus ersten Filter-Pixeln (R) und zweiten Filter-Pixeln (C) aufweist,
wobei die Matrix-Anordnung (mᵢⱼ) aus horizontalen Zeilen (lᵢ) und vertikalen Spalten (kⱼ) aufgebaut ist,
wobei die ersten Filter-Pixel (R) und zweiten Filter-Pixel (C) unterschiedliches Transmissionsverhalten für optisches Licht aufweisen, wobei in jeder Zeile (lᵢ) und/oder jeder Spalte (kⱼ) erste Filter-Pixel (R) und zweite Filter-Pixel (C) angeordnet sind, und
wobei die Matrix-Anordnung (mᵢⱼ) lediglich aus den ersten Filter-Pixeln (R) und den zweiten Filter-Pixeln (C) besteht,
**dadurch gekennzeichnet, dass**
dass die Matrix-Anordnung (mᵢⱼ) alternierend zweite Zeilen (l1, l3) aus zweiten Filter-Pixeln (C) und kombinierte Zeilen (l2, l4) aus ersten Filter-Pixeln (R) und zweiten Filter-Pixeln (C) aufweist,
wobei in aufeinander folgenden kombinierten Zeilen (l2, l4) die ersten Filter-Pixel (R) in unterschiedlichen Spalten (kⱼ) angeordnet sind.

2. Farbmaske für einen Bildsensor (7) einer Fahrzeug-Kamera (2),
wobei die Farbmaske (8) eine Matrix-Anordnung (mᵢⱼ) aus ersten Filter-Pixeln (R) und zweiten Filter-Pixeln (C) aufweist,
wobei die Matrix-Anordnung (mᵢⱼ) aus horizontalen Zeilen (lᵢ) und vertikalen Spalten (kⱼ) aufgebaut ist,
wobei die ersten Filter-Pixel (R) und zweiten Filter-Pixel (C) unterschiedliches Transmissionsverhalten für optisches Licht aufweisen, wobei in jeder Zeile (lᵢ) und/oder jeder Spalte (kⱼ) erste Filter-Pixel (R) und zweite Filter-Pixel (C) angeordnet sind, und
wobei die Matrix-Anordnung (mᵢⱼ) lediglich aus den ersten Filter-Pixeln (R) und den zweiten Filter-Pixeln (C) besteht,
**dadurch gekennzeichnet, dass**
die Matrix-Anordnung (mᵢⱼ) alternierend zweite Spalten (k9, k11, k13) mit lediglich zweiten Filter-Pixeln (C) und kombinierte Spalten (k8, k10, k12, k14) aus ersten Filter-Pixeln (R) und zweiten Filter-Pixeln (C) aufweist,
wobei in aufeinander folgenden kombinierten Spalten (k8, k10) die ersten Filter-Pixeln (R) in unterschiedlichen Zeilen (li) angeordnet sind.

3. Farbmaske nach Anspruch 1 oder 2, **dadurch gekennzeichnet, dass** ein von den zweiten Filter-Pixeln (C) transmittierter Wellenlängenbereich den von den ersten Filter-Pixeln (R) transmittierten Wellenlängenbereich umfasst.

4. Farbmaske nach Anspruch 3, **dadurch gekennzeichnet, dass** die zweiten Filter-Pixel (C) für optisches Licht zumindest im wesentlichen vollständig transparent sind.

5. Farbmaske nach einem der vorherigen Ansprüche, **dadurch gekennzeichnet, dass** die ersten Filter-Pixel (R) rote Filter-Pixel (R) sind.

6. Farbmaske nach einem der vorherigen Ansprüche, **dadurch gekennzeichnet, dass** die ersten Filter-Pixel (R) in aufeinander folgenden Zeilen (lᵢ) und/oder in aufeinander folgenden Spalten (kⱼ) zueinander versetzt angeordnet sind.

7. Kamera (2) für ein Fahrzeug (1), die aufweist:
einen Bildsensor (7) mit einer Matrixanordnung von Sensor-Pixeln zur Aufnahme optischen Lichtes und Ausgabe von Bildsignalen (S1),
eine Farbmaske (8) nach einem der vorherigen Ansprüche, die vor dem Bildsensor (7) angeordnet ist, wobei jedes Filter-Pixel (mᵢⱼ) direkt vor einem Sensorpixel angeordnet ist.

8. Fahrzeug (1) mit einer Kamera nach Anspruch 7 und mindestens einer Steuer- und Auswerteeinrichtung (9), die die Bildsignale (S1) von der Kamera (2) aufnimmt und aus einem zeitlichen Verlauf der Bildsignale (S1) ermittelt, ob in dem Erfassungsbereich (4) der Kamera (2) Objekte (01, 02, 03) angeordnet sind, die ein rotes Rücklicht oder ein weißes Scheinwerferlicht aussenden.

## Claims

1. Colour mask for an image sensor (7) of a vehicle camera (2),
the colour mask (8) having a matrix arrangement (mᵢⱼ) consisting of first filter pixels (R) and second filter pixels (C),
the matrix arrangement (mᵢⱼ) being constructed from horizontal rows (lᵢ) and vertical columns (kⱼ),
the first filter pixels (R) and second filter pixels (C) having different transmission behaviour for optical light, there being first filter pixels (R) and second filter pixels (C) arranged in each row (lᵢ) and/or each column (kⱼ), and
the matrix arrangement (mᵢⱼ) consisting only of the first filter pixels (R) and the second filter pixels (C),
**characterized in that**
the matrix arrangement (mᵢⱼ) alternately has second rows (11, 13), consisting of second filter pixels (C), and combined rows (12, 14) consisting of first filter pixels (R) and second filter pixels (C),
the first filter pixels (R) being arranged in different columns (kⱼ) in successive combined rows (12, 14).

2. Colour mask for an image sensor (7) of a vehicle camera (2),
the colour mask (8) having a matrix arrangement (mᵢⱼ) consisting of first filter pixels (R) and second filter pixels (C),
the matrix arrangement (mᵢⱼ) being constructed from horizontal rows (lᵢ) and vertical columns (kⱼ),
the first filter pixels (R) and second filter pixels (C) having different transmission behaviour for optical light, there being first filter pixels (R) and second filter pixels (C) arranged in each row (lᵢ) and/or each column (kⱼ), and
the matrix arrangement (mᵢⱼ) consisting only of the first filter pixels (R) and the second filter pixels (C),
**characterized in that**
the matrix arrangement (mᵢⱼ) alternately has second columns (k9, k11, k13) with only second filter pixels (C) and combined columns (k8, k10, k12, k14) consisting of first filter pixels (R) and second filter pixels (C),
the first filter pixels (R) being arranged in different rows (li) in successive combined columns (k8, k10).

3. Colour mask according to Claim 1 or 2, **characterized in that** a wavelength range transmitted by the second filter pixels (C) includes the wavelength range transmitted by the first filter pixels (R).

4. Colour mask according to Claim 3, **characterized in that** the second filter pixels (C) are at least substantially completely transparent to optical light.

5. Colour mask according to one of the preceding claims, **characterized in that** the first filter pixels (R) are red filter pixels (R).

6. Colour mask according to one of the preceding claims, **characterized in that** the first filter pixels (R) are arranged offset from one another in successive rows (lᵢ) and/or in successive columns (kⱼ).

7. Camera (2) for a vehicle (1), which camera has:
an image sensor (7) with a matrix arrangement of sensor pixels for receiving optical light and outputting image signals (S1), and
a colour mask (8) according to one of the preceding claims which is arranged in front of the image sensor (7), each filter pixel (mᵢⱼ) being arranged directly in front of a sensor pixel.

8. Vehicle (1) comprising a camera according to Claim 7 and at least one control and evaluation device (9) which receives the image signals (S1) from the camera (2) and determines from a time profile of the image signals (S1) whether objects (01, 02, 03) which emit a red rear light or a white headlamp light are arranged in the detection range (4) of the camera (2).

## Revendications

1. Masque coloré destiné à un capteur d'image (7) d'une caméra de véhicule (2),
dans lequel le masque coloré (8) comprend une configuration matricielle (mᵢⱼ) de premiers pixels de filtre (R) et de seconds pixels de filtre (C),
dans lequel la configuration matricielle (mᵢⱼ) est construite à partir de lignes horizontales (lᵢ) et de colonnes verticales (kⱼ),
dans lequel les premiers pixels de filtre (R) et les seconds pixels de filtre (C) présentent des propriétés de transmission différentes vis-à-vis de la lumière optique, dans lequel des premiers pixels de filtre (R) et des seconds pixels de filtre (C) sont disposés dans chaque ligne (lᵢ) et/ou chaque colonne (kⱼ), et
dans lequel la configuration matricielle (mᵢⱼ) est uniquement constituée des premiers pixels de filtre (R) et des seconds pixels de filtre (C),
**caractérisé en ce que** la configuration matricielle (mᵢⱼ) comprend des secondes lignes alternées (11, 13) de seconds pixels de filtre (C) et des lignes combinées (12, 14) de premiers pixels de filtre (R) et de seconds pixels de filtre (C),
dans lequel les premiers pixels de filtre (R) des différentes colonnes (kⱼ) sont disposés dans des lignes combinées (12, 14) se suivant les unes les autres.

2. Masque coloré destiné à un capteur d'image (7) d'une caméra de véhicule (2),
dans lequel le masque coloré (8) comprend une configuration matricielle (mᵢⱼ) de premiers pixels de filtre (R) et de seconds pixels de filtre (C),
dans lequel la configuration matricielle (mᵢⱼ) est construite à partir de lignes horizontales (lᵢ) et de colonnes verticales (kⱼ),
dans lequel les premiers pixels de filtre (R) et les seconds pixels de filtre (C) présentent des propriétés de transmission différentes vis-à-vis de la lumière optique, dans lequel des premiers pixels de filtre (R) et des seconds pixels de filtre (C) sont disposés dans chaque ligne (lᵢ) et/ou chaque colonne (j), et
dans lequel la configuration matricielle (mᵢⱼ) est uniquement constituée des premiers pixels de filtre (R) et des seconds pixels de filtre (C),
**caractérisé en ce que** la configuration matricielle (mᵢⱼ) comprend des secondes colonnes alternées (k9, k11, k13) comportant uniquement des seconds pixels de filtre (C) et des colonnes combinées (k8, k10, k12, k14) de premiers pixels de filtre (R) et de seconds pixels de filtre (C),
dans lequel les premiers pixels de filtre (R) des différentes lignes (lᵢ) sont disposés dans des colonnes combinées (k8, k10) se suivant les unes les autres.

3. Masque coloré selon la revendication 1 ou 2, **caractérisé en ce qu'**un domaine de longueur d'onde transmis par les seconds pixels de filtre (C) comprend le domaine de longueur d'onde transmis par les premiers pixels de filtre (R).

4. Masque coloré selon la revendication 3, **caractérisé en ce que** les seconds pixels de filtre (C) sont au moins sensiblement totalement transparents vis-à-vis de la lumière optique.

5. Masque coloré selon l'une quelconque des revendications précédentes, **caractérisé en ce que** les premiers pixels de filtre (R) sont des pixels de filtre (R) rouges.

6. Masque coloré selon l'une quelconque des revendications précédentes, **caractérisé en ce que** les premiers pixels de filtre (R) sont disposés de manière à être décalés les uns par rapport aux autres dans des lignes se suivant les unes les autres (lᵢ) et/ou dans des colonnes se suivant les unes les autres (kⱼ).

7. Caméra (2) destinée à un véhicule (1), comprenant :
un capteur d'image (7) comportant une configuration matricielle de pixels de capteur destinés à acquérir une lumière optique et à délivrer des signaux d'images (S1),
un masque coloré (8) selon l'une quelconque des revendications précédentes, qui est disposé à l'avant du capteur d'image (7), dans lequel chaque pixel de filtre (mᵢⱼ) est disposé directement à l'avant d'un pixel de capteur.

8. Véhicule (1) comportant une caméra selon la revendication 7 et au moins un dispositif de commande et d'évaluation (9) qui acquiert les signaux d'images (S1) de la caméra (2) et détermine à partir d'une évolution temporelle des signaux d'images (S1) si des objets (01, 02, 03) émettant une lumière réfléchie rouge ou une lumière de projecteur blanche sont présents dans la zone de détection (4) de la caméra (2).
